# EUROPÄISCHE PATENTSCHRIFT

(11) **EP 2 390 510 B1**
(45) Veröffentlichungstag und Bekanntmachung des Hinweises auf die Patenterteilung: **06.03.2019**
(21) Anmeldenummer: 11003587.0
(22) Anmeldetag: 03.05.2011
(51) Int. Cl.: F04D 19/04, F04D 29/10, F04D 29/12, F04D 29/059, F04D 29/58, F16C 33/66, F16C 33/76, F04D 29/063, F16C 19/06

(54) **Vakuumpumpe**
Vacuum pump
Pompe à vide

(30) Priorität: 28.05.2010 DE 102010021945
(43) Veröffentlichungstag der Anmeldung: 30.11.2011
(73) Patentinhaber: PFEIFFER VACUUM GMBH, 35614 Asslar (DE)
(72) Erfinder: Schill, Michael, 35614 Aßlar (DE)
(74) Vertreter: Manitz Finsterwald Patentanwälte PartmbB

(56) Entgegenhaltungen:
- DE-A1- 2 052 120
- DE-A1-102006 053 237

## Beschreibung

Die Erfindung betrifft eine Vakuumpumpe nach dem Oberbegriff des ersten Anspruchs, wie sie beispielweise aus der DE20 52 120 A1 bekannt geworden ist.

In sehr vielen Bauarten von Vakuumpumpen zur Erzeugung industrieller Vakua kommen rotierende Bauteile zum Einsatz, mitunter mit sehr hohen Drehzahlen von einigen Zehntausend Umdrehungen pro Minute, beispielsweise in Molekularpumpen. Diese rotierenden Bauteile müssen von Lagern drehbar unterstützt werden. Sehr oft werden hierfür geschmierte Wälzlager benutzt. Zur Schmierung kommt neben der Fettschmierung die Ölschmierung in Frage, bei der in der Regel Schmiermittel aus einem Speicher entnommen und dem Wälzlager zugeführt wird. Das Schmiermittel läuft dann aus dem Lager zurück in den Speicher, so dass sich ein Kreislauf ergibt. Ein derartiger Kreislauf ist in der DE 10 2006 053 237 A1 vorgestellt.

Es wird beobachtet, dass die Schmiermittelmenge im Laufe der Zeit abnimmt, wodurch ein Auffüllen oder Wechsel des Speichers notwendig wird. Dem steht der Wunsch nach längeren Wartungsintervallen entgegen.

Es war daher Aufgabe der Erfindung, die vorgenannten Verluste zu reduzieren.

Diese Aufgabe wird gelöst durch eine Vakuumpumpe mit den Merkmalen des ersten Anspruchs. Die Ansprüche 2 bis 11 geben vorteilhafte Weiterbildungen an.

Die Vakuumpumpe nach Anspruch 1 weist ein Kondensationselement auf, welches auf der einem pumpaktiven Bauteil zugewandten Seite des geschmierten Lagers angeordnet ist. Dessen Oberfläche befindet sich auf einer Temperatur, bei der das Schmiermittel kondensiert. Hierdurch werden Verluste reduziert, die durch Verdampfung des Schmiermittels im Lager entstehen. Der Schmiermitteldampf steigt aufgrund des Druckgefälles entlang der Welle in Richtung des pumpaktiven Bauteils auf, kondensiert am Kondensationselement und tropft als Flüssigkeit in Richtung Lager zurück. Zugleich wird verhindert, dass dieser Schmiermitteldampf das Vakuum im Bereich des pumpaktiven Bauteils und im Bereich von Einlass und Auslass verunreinigt. Das pumpaktive Bauteil kann dabei einen Scheibenrotor turbomolekularer Bauart, ein Glockenrotor turbomolekularer Bauart, Holweck- und Seitenkanalpumpelemente und dergleichen umfassen. Neben dem Lager kann ein zweites Lager am Wellenende oder derart vorgesehen sein, dass sich eine fliegende Lagerung des pumpaktiven Bauteils ergibt.

Gemäß einer ersten Weiterbildung ist das Kondensationselement zwischen Lager und einem Antrieb angeordnet, so dass der Antriebsbereich nicht durch Schmiermittel verunreinigt wird. Zudem wird so der Spalt zwischen Welle und Motorspule als weitere Dichtung in Form eines schlechten Leitwerts ausgenutzt.

Eine andere Weiterbildung sieht vor, das Kondensationselement ringförmig zu gestalten und hierdurch eine symmetrische Wirkung bezüglich der Wellenachse zu erreichen, was den Betrieb der Vakuumpumpe in unterschiedlichen Lage erlaubt.

Eine Weiterbildung bezieht sich auf die Gestaltung des Kondensationselements derart, dass es einen elektrothermischen Wandler umfasst. Dies ergibt eine einfache Konstruktion, zudem kann auf die ohnehin vorhandene elektrische Versorgung zurückgegriffen werden. Außerdem vermeidet diese Lösung das Einfügen einer Vibrationsquelle.

Der elektrothermische Wandler wird weiter verbessert, indem er ringförmig die Welle umgebend gestaltet ist. Hierdurch wird eine gleichmäßige Kühlung der Oberfläche erreicht, an der das Schmiermittel kondensiert.

Eine nächste Weiterbildung nach Anspruch 6 sieht vor, dass auf der Oberfläche, auf der das Schmiermittel kondensiert, eine Ablaufstruktur vorgesehen ist. Diese begünstigt das Ablaufen des kondensierten Schmiermittels.

Eine weitere Weiterbildung verringert die Verluste, indem eine Rückführung vorgesehen ist, die kondensensiertes Schmiermittel in einen Schmiermittelspeicher zurückleitet. Dieser Vorteil wird mit der Lösung nach Anspruch 8 vertieft, wenn auch zwischen Lager und Schmiermittelspeicher ein Rückfördermittel eingesetzt wird.

Besonders ausgeprägt sind die Vorteile, wenn die Vakuumpumpe ein pumpaktives Bauteil nach den Ansprüchen 9 oder 10 aufweist. Gerade im Zusammenspiel mit einem Permanentmagnetlager als zweitem und schmiermittelfreiem Lager ist es vorteilhaft, Schmiermitteldämpfe mit einem Kondensationselement von dem Bereich des pumpaktiven Bauteils fernzuhalten.

Anhand von Ausführungsbeispielen soll die Erfindung näher erläutert und die Darstellung der Vorteile vertieft werden. Es zeigen:
- Fig. 1:: Schnitt durch eine Vakuumpumpe mit Kondensationselement,
- Fig. 2:: Schnitt senkrecht zur Wellenachse durch ein Kondensationselement gemäß erstem Beispiel,
- Fig. 3:: Schnitt entlang der Wellenachse durch ein Kondensationselement gemäß erstem Beispiel,
- Fig. 4:: Schnitt entlang der Wellenachse durch ein Kondensationselement gemäß zweitem Beispiel,
- Fig. 5:: Blick senkrecht zur Wellenachse auf das Kondensationselement gemäß zweitem Beispiel.

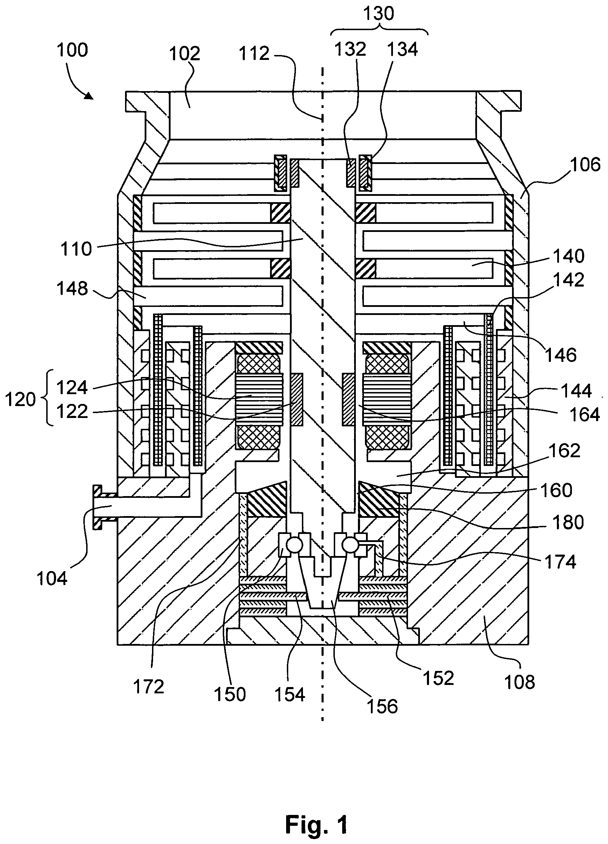

In Fig.1 ist eine Vakuumpumpe 100 im Schnitt entlang einer Wellenachse 112 gezeigt. Durch einen Einlass 102 tritt Gas in die Vakuumpumpe ein, wird in ihr verdichtet und anschließend durch den Auslass 104 ausgestoßen. Im Gehäuse 106 der Vakuumpumpe ist eine Welle 110 vorgesehen. Das dem Einlass zugeordnete Wellenende wird von einem Permanentmagnetlager 130 drehbar unterstützt, in welchem rotorseitige Magnetringe 132 und statorseitige Magnetringe 134 zusammenwirken. Das entgegengesetzte Wellenende wird von einem als Kugellager ausgeführten Lager 150 unterstützt. Die Welle wird durch den Antrieb 120 in schnelle Drehung von einigen Zehntausend Umdrehungen pro Minute versetzt. Der Antrieb umfasst eine elektrische Spule 124 und einen auf der Welle angeordneten und mit dem rotierenden magnetischen Feld der Spule zusammenwirkenden Motormagneten 122.

Auf der Welle sind pumpaktive Bauteile angeordnet, die in Zusammenwirken mit statorseitigen Bauteilen, z.B. beschaufelte Scheiben 148, die Pumpwirkung erzeugen. Im gezeigten Beispiel handelt es sich bei den wellenseitigen pumpaktiven Bauteilen um beschaufelte Scheiben 140 nach turbomolekularer Bauart und glatten Hülsen 142, die mit den gewindeartig gestalteten Kanäle aufweisende Statorkomponenten 144 eine Holweckstufe bilden. Die Hülsen werden von einer Nabe 146 getragen. Neben diesen beiden Pumpprinzipien können auch andere Pumpstrukturen genutzt werden, beispielsweise Gaedestufen oder Seitenkanalpumpstufen.

Das Gehäuse umfasst ein Unterteil 108. In diesem sind die stehenden Bauteile des Lagers 150 gefasst. Weiterhin beherbergt es den Schmiermittelspeicher 152. In diesem ist Schmiermittel bevorratet, welches über die Schmiermittelzufuhr 154 einer auf der Welle angeordneten Spritzmutter 156 zugeführt wird. Diese besitzt eine konische Oberfläche, deren Durchmesser in Richtung Lager zunimmt, so dass das Schmiermittel durch Fliehkraftwirkung in das Lager hineingefördert wird. Im gezeigten Beispiel ist der Schmiermittelspeicher als eine Packung von Filzlagen ausgeführt. Die Schmiermittelzufuhr umfasst einen Docht, der mit wenigstens einer Filzlage verbunden ist und die Spritzmutter berührt. Der Schmiermitteltransport erfolgt durch Kapillarwirkung. Alternativ kann die Schmiermittelzufuhr als Spritzdüse ausgeführt sein, durch die Schmiermittel von einer Schmiermittelpumpe auf die Spritzmutter gefördert wird.

Auf der dem pumpaktiven Bauteil zugewandten Seite des Lagers ist ein Kondensationselement 180 angeordnet. Durch die Wirkung der pumpaktiven Bauteile entsteht Wärme, die über die Welle dem Lager 150 zugeführt wird. Hierdurch wird das Schmiermittel erwärmt, so dass ein Teil verdampft. Dieser Schmiermitteldampf bewegt sich aufgrund des Druckgradienten innerhalb der Vakuumpumpe in Richtung der pumpaktiven Bauteile und passiert dabei den Wellenspalt 160 zwischen Kondensationselement und Welle. Dieser Wellenspalt wirkt vorteilhaft als schlechter Leitwert. Das Kondensationselement befindet sich auf einer Temperatur, bei der das Schmiermittel wieder in den flüssigen Zustand übergeht. Das verflüssigte Schmiermittel tropft dann in Richtung Lager zurück. Durch diese Reduktion der Schmiermittelverluste wird auch die Verunreinigung des Bereichs der pumpaktiven Bauteile verringert, so dass sich im Zusammenwirken mit dem schmiermittelfreien Permanentmagnetlager ein sehr reines Vakuum ergibt.

Vorteilhaft ist es, auf der dem Lager abgewandten Seite des Kondendationselements einen Fangraum 162 vorzusehen, von welchem aus eine Rückführung 172 das aufgefangene Schmiermittel zum Schmiermittelspeicher zurückführt. Diese Rückführung kann als Kanal gestaltet sein, vorteilhaft ist es, ein poriges Material zu benutzen, welches über Kapillarwirkung das Schmiermittel fördert, beispielsweise ein Filz.

Ebenfalls vorteilhaft ist es, ein Rückfördermittel 174 vorzusehen, welches Schmiermittel vom Lager selbst zum Schmiermittelspeicher zurückfördert.

Durch Rückführung und Rückfördermittel entstehen zwei Kreisläufe, die genutztes Schmiermittel zurück zum Schmiermittelspeicher transportieren, so dass die Verluste deutlich verringert und somit das Wartungsintervall der Vakuumpumpe deutlich verlängert wird. Außerdem wird auf diese Weise erreicht, dass die Vakuumpumpe in allen Einbaulagen betrieben werden kann und das Schmiermittel dabei durch Rückführung und Rückfördermittel zum Schmiermittelspeicher zurückgelangt.

Vorteilhaft ist das Kondensationselement zwischen dem Lager und dem Antrieb und die Welle umgebend angeordnet, so dass der Motorspalt 164 zwischen Spule 122 und Welle 110 als weiterer Dichtspalt wirkt.

Das Kondensationselement kann beispielsweise über eine Anschluss an ein Kühlwasserkreislauf hinreichend gekühlt werden. Hierzu sind entsprechende Kühlwasserkanäle oder eingearbeitete Kupferrohre notwendig, die Kühlwasser oder ein anderes flüssiges Kühlmittel vom Äußeren der Vakuumpumpe zum Kondensationselement, durch es hindurch und anschließend wieder zum Äußeren der Vakuumpumpe führen.

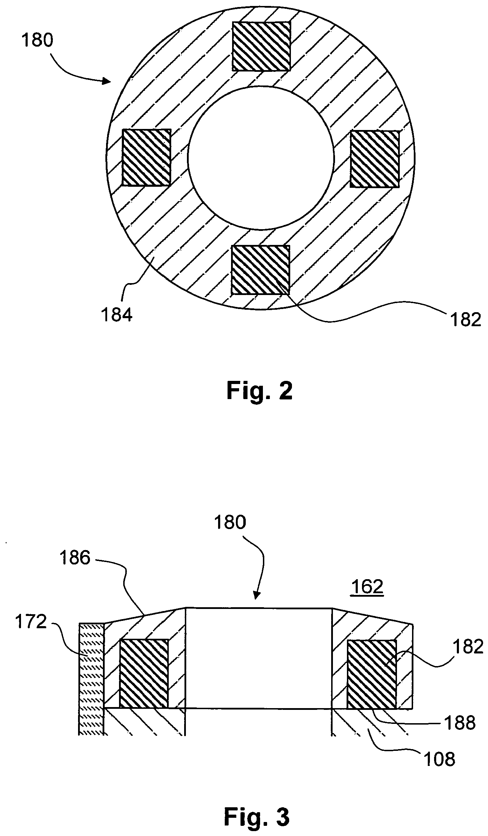

Eine vorteilhafte Ausführung des Kondensationselements ist in Fig. 2 und Fig. 3 im Detail gezeigt.

Zunächst zeigt Fig. 2 einen Schnitt durch das Kondensationselement senkrecht zur Wellenachse. Das Kondensationselement 180 umfasst einen Kühlkörper 184. Dieser ist ringfömig gestaltet, so dass im montierten Zustand die Welle der Vakuumpumpe durch die zentrale Öffnung des Ringes hindurchtritt. Der Kühlkörper weist über den Umfang verteilt Ausnehmungen auf, in welchen elektrothermische Wandler 182 angeordnet sind. Wenigstens ein Wandler ist notwendig, eine Mehrzahl ist vorteilhaft, um eine gleichmäßigere Temperaturverteilung zu erreichen. Zwischen Kühlkörper und Gehäuse kann ein thermisches Trennelement, beispielsweise eine schlecht Wärme leitende Schicht, vorgesehen sein. Dadurch wird die Temperaturabsenkung des Kühlkörpers erleichtert. Eine solche Schicht kann beispielsweise Siliziumoxid umfassen. Alternativ sind Freidrehungen derart vorgesehen, dass Kontaktfläche von Kühlkörper und Gehäuse reduziert wird.

In Fig. 3 ist das Kondensationselement 180 im Schnitt entlang der Wellenachse dargestellt. Die dem Fangraum 162 zugewandte Seite weist eine Schräge 186 auf, entlang der das Schmiermittel von der zentralen Öffnung weglaufen kann. Es gelangt auf diese Weise zur Rückführung 172. Diese ist zur Rückführung des Schmiermittels eine Kapillarwirkung erzielend gestaltet, beispielsweise als hinreichend enger Spalt, enge Bohrung oder als wenigstens ein Element aus porigem Material. Sie kann das Kondensationselement ringförmig umgeben und mit stabförmigen Elementen zusammenwirken, die bis zum Schmiermittelspeicher reichen. Der Schräge gegenüber liegt eine Oberfläche des Kühlkörpers, die dem Unterteil 108 des Gehäuses der Vakuumpumpe zugewandt ist. Zwischen elektrothermischem Wandler 182 und Unterteil 108 ist an einer Kontaktfläche 188 ein guter Wärmeübergang derart geschaffen, dass der elektrothermische Wandler das Unterteil als Wärmesenke für das Abkühlen des Kühlkörpers nutzen kann.

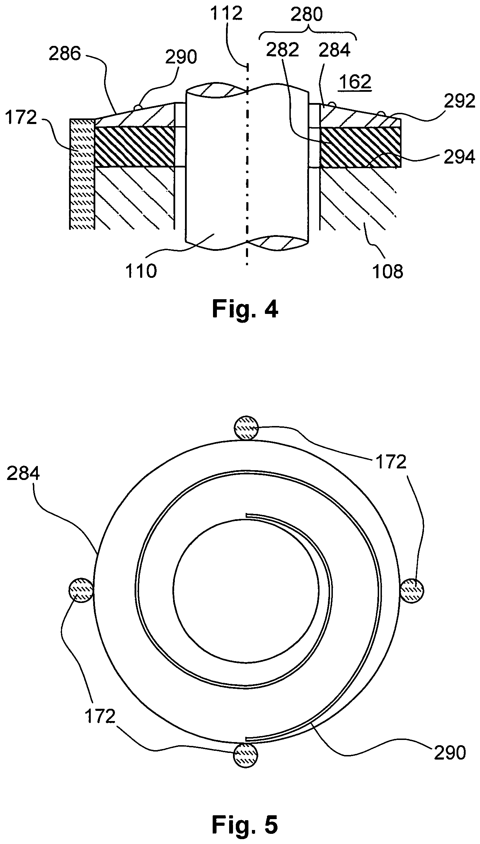

In Fig. 4 und Fig. 5 ist ein Kondensationselement 280 gemäß zweitem Ausführungsbeispiel für die Vakuumpumpe nach Fig. 1 gezeigt. Ein Schnitt entlang der Wellenachse ist in Fig. 4 dargestellt. Das Kondensationselement weist einen ringförmigen Kühlkörper 284 auf, welcher eine konische Oberfläche 286 in Richtung des Fangraumes 162 aufweist. Der Konus entsteht durch eine Abnahme der Dicke des Kühlkörpers von der Wellenachse 112 in radialer Richtung nach außen hin. Auf der Oberfläche ist eine Ablaufstruktur 290 vorgesehen, die das Ablaufen des Schmiermittels von der Wellenachse weg zur Rückführung 172 hin unterstützt. Zwischen Kühlkörper 284 und Unterteil des Gehäuses 108 ist ein ringförmiger, die Welle 110 umgebender elektrothermischer Wandler vorgesehen. Dieser besitzt, sobald er von elektrischem Strom durchflossen wird, eine warme Oberfläche 294, welche mit dem Gehäuse 108 in wärmeleitendem Kontakt steht, und eine kalte Oberfläche 292, welche mit dem Kühlkörper in wärmeleitendem Kontakt steht. Die Versorgung mit elektrischem Strom erfolgt beispielsweise über die ohnehin für den Antrieb vorhandene Spannungsversorgung.

In Fig. 5 ist schließlich ein Blick auf den Kühlkörper 284 gezeigt. Die Ablaufstruktur 290 ist als eine spiralförmig umlaufende Erhebung gestaltet. Durch sie wird Schmiermittel, welches auf der kalten Oberfläche kondensiert, gezielt zur Rückführung 172 geführt. Um verschiedene Einbaulagen der Vakuumpumpe zu ermöglichen, ist eine Mehrzahl von Rückführungsbauteilen entlang des Umfangs des Kühlkörpers vorgesehen. Alternativ kann statt einer Erhebung eine Rille oder Nut vorgesehen sein. Die Spirale kann mehrere Gänge umfassen. Es können auch mehrere Kreisbogenstücke oder Geraden vorgesehen sein, die vom inneren Randbereich zum äußeren Randbereich der konischen Oberfläche reichen.

## Patentansprüche

1. Vakuumpumpe (100) mit einer Welle (110), einem von Schmiermittel geschmierten und die Welle drehbar unterstützenden Lager (150), mit einem auf der Welle angeordneten pumpaktiven Bauteil (140, 142), wobei ein Kondensationselement (180; 280) auf der dem pumpaktiven Bauteil zugewandten Seite des Lagers angeordnet ist;
**dadurch gekennzeichnet, dass**
das Kondensationselement (180; 280) einen ringförmigen Kühlkörper (184; 284) aufweist, welcher auf der dem Lager (150) abgewandten Seite eine konische Oberfläche (186; 286) aufweist, die durch Abnahme der Dicke des Kühlkörpers (184; 284) von der Wellenachse (112) in radialer Richtung nach außen hin entsteht.

2. Vakuumpumpe (100) nach Anspruch 1, **dadurch gekennzeichnet, dass** das Kondensationselement (180; 280) zwischen dem Lager (150) und einem Antrieb (120) angeordnet ist.

3. Vakuumpumpe (100) nach Anspruch 1 oder 2, **dadurch gekennzeichnet, dass** das Kondensationselement (180; 280) ringförmig die Welle (110) umgebend gestaltet ist.

4. Vakuumpumpe (100) nach einem der vorhergehenden Ansprüche, **dadurch gekennzeichnet, dass** das Kondensationselement (180; 280) einen elektrothermischen Wandler (182; 282) umfasst.

5. Vakuumpumpe (100) nach Anspruch 4, **dadurch gekennzeichnet, dass** das Kondensationselement (180; 280) einen ringförmigen elektrothermischen Wandler (282) umfasst.

6. Vakuumpumpe (100) nach einem der vorhergehenden Ansprüche, **dadurch gekennzeichnet, dass** das Kondensationselement (180; 280) eine Ablaufstruktur (290) umfasst.

7. Vakuumpumpe (100) nach einem der vorhergehenden Ansprüche, **dadurch gekennzeichnet, dass** eine Rückführung (172) vorgesehen ist, mit der vom Kondensationselement (180; 280) aufgefangenes Schmiermittel zu einem Schmiermittelspeicher (152) zurückgeführt wird.

8. Vakuumpumpe (100) nach Anspruch 7, **dadurch gekennzeichnet, dass** ein Rückfördermittel (174) Schmiermittel vom Lager (150) zum Schmiermittelspeicher (152) fördert.

9. Vakuumpumpe (100) nach einem der vorhergehenden Ansprüche, **dadurch gekennzeichnet, dass** das pumpaktive Bauteil (140, 142) nach turbomolekularer Bauart (140) gestaltet ist.

10. Vakuumpumpe (100) nach einem der vorhergehenden Ansprüche, **dadurch gekennzeichnet, dass** das pumpaktive Bauteil (140, 142) eine mit Schaufeln versehene Scheibe (140) umfasst, die auf der Welle (110) angeordnet ist.

11. Vakuumpumpe (100) nach Anspruch 10, **dadurch gekennzeichnet, dass** die Welle (110) am einem Lager (150) gegenüberliegenden Ende von einem Permanentmagnetlager (130) drehbar unterstützt wird.

## Claims

1. A vacuum pump (100) having a shaft (110), having a bearing (150) which is lubricated by a lubricant and rotatably supports the shaft, and having a component (140, 142) acting as a pump arranged at the shaft, wherein a condensation element (180; 280) is arranged at a side of the bearing facing the component acting as a pump,
**characterized in that**
the condensation element (180; 280) has an annular heatsink (184; 284) which has a conical surface (186; 286) at a side remote from the bearing (150), said conical surface (186; 286) projecting outwardly from a shaft axis (112) in a radial direction due to a decrease in the thickness of the heatsink (184; 284).

2. A vacuum pump (100) in accordance with claim 1, **characterized in that** the condensation element (180; 280) is arranged between the bearing (150) and a drive (120).

3. A vacuum pump (100) in accordance with claim 1 or claim 2, **characterized in that** the condensation element (180; 280) is designed as surrounding the shaft (110) in an annular form.

4. A vacuum pump (100) in accordance with any one of the preceding claims, **characterized in that** the condensation element (180; 280) comprises an electrothermal converter (182; 282).

5. A vacuum pump (100) in accordance with claim 4, **characterized in that** the condensation element (180; 280) comprises an annular electrothermal converter (282).

6. A vacuum pump (100) in accordance with any one of the preceding claims, **characterized in that** the condensation element (180; 280) comprises a run-off structure (290).

7. A vacuum pump (100) in accordance with any one of the preceding claims, **characterized in that** a return device (172) is provided by which lubricant collected by the condensation element (180; 280) is guided back to a lubricant store (152).

8. A vacuum pump (100) in accordance with claim 7, **characterized in that** a return means (174) conveys lubricant from the bearing (150) to the lubricant store (152).

9. A vacuum pump (100) in accordance with any one of the preceding claims, **characterized in that** the component (140, 142) acting as a pump is configured in a turbomolecular design (140).

10. A vacuum pump (100) in accordance with any one of the preceding claims, **characterized in that** the component (140, 142) acting as a pump comprises a disk (140) which is provided with vanes and which is arranged at the shaft (110).

11. A vacuum pump (100) in accordance with claim 10, **characterized in that** the shaft (110) is rotatably supported by a permanent magnet bearing (130) at an end disposed opposite a bearing (150).

## Revendications

1. Pompe à vide (100) comportant un arbre (110), un palier (150) lubrifié avec un lubrifiant et soutenant en rotation ledit arbre, un composant (140, 142) actif en pompage agencé sur ledit arbre, un élément de condensation (180 ; 280) étant agencé sur le côté du palier tourné vers le composant actif en pompage ;
**caractérisée en ce que**
l'élément de condensation (180 ; 280) comprend un corps de refroidissement annulaire (184 ; 284) qui présente une surface conique (186 ; 286) sur le côté détourné du palier (150), laquelle est formée par réduction de l'épaisseur du corps de refroidissement (184 ; 284) depuis l'axe (112) de l'arbre en direction radiale vers l'extérieur.

2. Pompe à vide (100) selon la revendication 1,
**caractérisée en ce que**
l'élément de condensation (180 ; 280) est agencé entre le palier (150) et un entraînement (120).

3. Pompe à vide (100) selon la revendication 1 ou 2,
**caractérisée en ce que**
l'élément de condensation (180 ; 280) est conçu de manière à entourer en forme d'anneau ledit arbre (110).

4. Pompe à vide (100) selon l'une des revendications précédentes,
**caractérisée en ce que**
l'élément de condensation (180 ; 280) comprend un transducteur électro-thermique (182 ; 282).

5. Pompe à vide (100) selon la revendication 4,
**caractérisée en ce que**
l'élément de condensation (180 ; 280) comprend un transducteur électro-thermique annulaire (282).

6. Pompe à vide (100) selon l'une des revendications précédentes,
**caractérisée en ce que**
l'élément de condensation (180 ; 280) comprend une structure de drainage (290).

7. Pompe à vide (100) selon l'une des revendications précédentes,
**caractérisée en ce que**
il est prévu un guidage de retour (172) permettant de faire retourner vers un réservoir à lubrifiant (152) un lubrifiant capté par l'élément de condensation (180 ; 280).

8. Pompe à vide (100) selon la revendication 7,
**caractérisée en ce que**
un convoyeur de retour (174) achemine le lubrifiant depuis le palier (150) vers le réservoir à lubrifiant (152).

9. Pompe à vide (100) selon l'une des revendications précédentes,
**caractérisée en ce que**
le composant actif en pompage (140, 142) est conçu selon un type structurel turbomoléculaire (140).

10. Pompe à vide (100) selon l'une des revendications précédentes,
**caractérisée en ce que**
le composant actif en pompage (140, 142) comprend un disque (140) pourvu d'aubes et agencé sur ledit arbre (110).

11. Pompe à vide (100) selon la revendication 10,
**caractérisée en ce que**
l'arbre (110) est soutenu en rotation par un palier à aimant permanant (130) à l'extrémité opposée à un palier (150).
